# EUROPEAN PATENT APPLICATION

(11) **EP 1 655 588 A1**
(43) Date of publication of application: **10.05.2006**
(21) Application number: 04256934.3
(22) Date of filing: 09.11.2004
(51) Int. Cl.: G01J 3/02

(54) **Mirror translation mechanism for cavity ring down spectroscopy**

(71) Applicant: Picarro Inc., Sunnyvale, CA 94085 (US)
(72) Inventor: Fidric, Bernard, Cupertino, CA 95014 (US)
(74) Representative: Benson, John Everett

(57) **Abstract**

A mirror translation assembly having a monolithic mirror support member affixed to a monolithic transducer support member, where these two members have thin sections that are spaced apart from each other and which are deformable by a transducer affixed to the transducer support member, and where the two support members preferably have substantially the same shape. In this manner, a mirror positioned on the mirror support member can be translated without undesirable tilt, while the high stress regions within the assembly are desirably spaced apart from the bond between the two monolithic members.

## Description

### Field of the Invention:

This invention relates to a mirror translation assembly for use in cavity ring down spectroscopy.

### Background

Cavity ring down spectroscopy (CRDS) is an analytical technique that is becoming increasingly popular for the detection of target species (analytes) which are present in very low concentrations. CRDS has been applied to numerous systems in the visible, ultraviolet and infrared spectral ranges. For discussions of CRDS, see U.S. Patent No. 5,912,740, issued to Zare et al, U.S. Patent No. 5,528,040, issued to Lehmann, and an article by O'Keefe and Deacon in Rev. Sci. Instrum. 59(12) 2544-2551, 1998.

In a linear cavity CRDS instrument, the analyte sample (absorbing material) is placed in a high-finesse, stable optical resonator cavity that includes two mirrors facing each other along a common optical axis. Incoming light incident on one mirror then circulates back and forth multiple times within the resonator, generating standing waves having periodic spatial variations. Light exiting through one or the other mirror provides a measure of the intra-cavity light intensity.

Alternatively, the resonator cavity can be a ring cavity utilizing three, four or more mirrors, where normally one mirror is concave and two mirrors are planar in a three-mirror cavity, with one of the two planar mirrors receiving the incoming light. Incoming light incident on one mirror then circulates unidirectionally multiple times within the resonator. In either a linear cavity or a ring cavity the laser light source can be either a pulsed or a continuous wave (CW) laser. In either case, the external laser light source is tunable within a wavelength (or frequency) range applicable to the target analyte so as to generate an absorption spectra within that range.

The optical resonator cavity defines a closed, round trip path along which light circulates repeatedly. Loss within a cavity is inevitable so that the intensity of light circulating within the cavity decreases in time (i.e., the light intensity "rings-down") when the optical source (e.g., a laser) has ceased providing additional light for the cavity. For an empty (i.e., sample-free) cavity, the circulating intensity follows an exponential decay characterized by a ring-down time (or rate) that depends on the reflectivity of the cavity mirrors, the round trip path length of the cavity and the speed of light within the cavity. When an analyte sample is placed within the cavity, the ring-down time decreases due to light absorption by the sample, and this change in ring-down time provides a measurement of the loss specifically induced by the sample. This measurement of sample-induced loss is the basis for cavity ring-down spectroscopy.

An advantage of CRDS, compared to conventional absorption spectroscopy, is that very low levels of target species within a sample can be detected since the light passes through the sample repeatedly. To maximize sensitivity, high reflectivity mirrors are used to form the cavity and the optical wavelengths to which the laser light source is tuned are chosen to correspond to strong absorption lines of the particular target analyte of interest. An absorption spectrum for the sample is obtained by plotting the reciprocal of the ring-down rate versus the wavelength of the incident light.

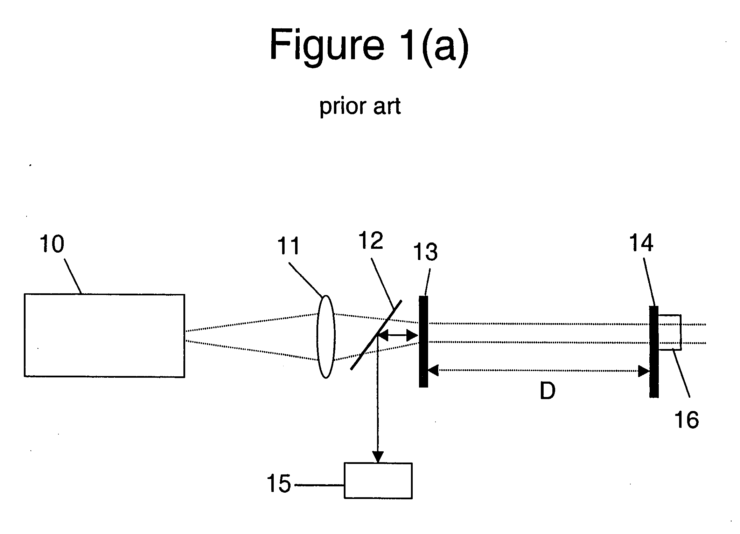

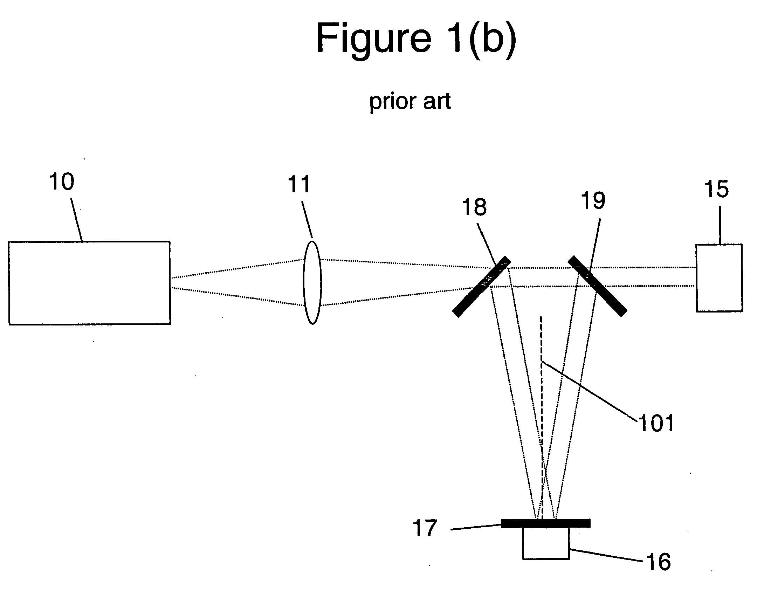

It is frequently desirable to use a CW laser source for CRDS, emitting radiation at substantially a single wavelength λ. In such instances, the optical length of the ring down cavity must be matched to this wavelength, to allow a resonant buildup of the source radiation within the cavity. For a linear cavity, the cavity length must be equal to nλ/2, i.e., a whole number multiple of one-half the operating wave length of the laser. That is, the dimension D as shown in Figure 1(a) must equal nλ/2. Similarly, in the case of a ring cavity, the round trip path length (i.e., the triangular path ABC shown in Figure 1(b)) must be equal to nλ, an integer multiple of the operating wavelength λ of the laser. In order to obtain an absorption spectrum of a sample using a CW laser, the wavelength of the laser is varied, and at each wavelength at which data is taken, the cavity is adjusted so that the above indicated matching condition is satisfied. If a pulsed laser source is used, the cavity round trip length need not be matched to the source wavelength, because a pulsed source emits radiation at multiple wavelengths.

One method for matching a cavity to the source wavelength of a CW laser is to provide translation means for a cavity mirror, i.e., at least one of the reflecting mirrors in the cavity is made movable by an amount sufficient to change the round trip path length by at least the selected operation wavelength, i.e., ≥ λ. In a linear cavity, the moveable mirror will normally be the non-input light receiving mirror shown as 14 in Figure 1(a). In a three mirror ring cavity, as shown in Figure 1(b), the moveable mirror will normally be a mirror that neither couples light into the cavity nor couples light out of the cavity, shown as 17 on Figure 1(b).

In either a two-mirror or three-mirror cavity, the operational requirements for the movable mirror and its mounting are stringent. In particular, the mirror must be movable by a precise distance in a linear fashion without tilting or canting. This movement must be consistent over the operating life of the CRDS instrument and resistant to the effects of temperature change. It is also desirable that the mount be readily fabricated to the requisite close tolerances.

### Summary

A preferred embodiment of the present invention is a mirror translation assembly having a monolithic mirror support member affixed to a monolithic transducer support member, where these two support members have thin sections that are spaced apart from each other and which are deformable by at least one transducer affixed to the transducer support member, and where the two members have substantially the same shape. The high stress regions within the assembly are spaced apart from the bond between the two monolithic members. In this manner, a mirror positioned on the mirror support member can be translated without undesirable tilt or cant.

### Brief Description of the Drawings.

Figures 1(a) and 1(b) show the arrangement of the mirrors in conventional two-mirror linear cavity (a) and three-mirror ring cavity (b) CRDS instruments, respectively.
Figure 2 is a cross-sectional view of a prior art mirror mount of a type designed for use in a ring laser gyroscope.
Figure 3 is a cross-sectional view of a prior art mirror mount of a type used in a CRDS instrument.
Figure 4 is a cross-sectional view of a mirror translation assembly in accordance with the present invention.
Figure 5 schematically shows the forces imposed on a transducer support member by two transducers.
Figure 6 is an exploded, partly cut away isometric view of a mirror translation assembly in accordance with the present invention.

### Detailed Description of the Drawings

Figure 1(a) schematically illustrates a cavity ring down spectroscopy instrument including a linear ring down cavity made from two highly reflective mirrors 13 and 14 aligned as a stable, low-loss optical cavity. A single mode, tunable, CW laser 10 is directed to the ring down cavity formed by high reflectivity mirrors 13 and 14. The light from laser 10 is coupled into the ring down cavity through one end of the cavity after passing through a collimating lens 11. The light from laser 10 is trapped between mirrors 13 and 14 and when laser 10 is decoupled from the cavity (e.g., by blocking the path between laser and cavity, or by adjusting laser or cavity such that the matching condition D = nλ/2 is not satisfied) the intensity of the trapped light decays (rings down) due to the combined loss of the mirrors and any molecular absorber (i.e., analyte sample) located between the mirrors.

A photodetector 15 measures radiation levels exiting the ring down cavity cell through mirror 13 and impinging on beam splitter 12 and produces a corresponding signal. The decay rate of the ring down cavity cell is calculated from the signal produced by the photodetector and is used to determine the level of the trace species in the sample gas. Alternatively, detector 15 can be positioned to detect light transmitted through mirror 14, provided both mirror 14, and piezoelectric transducer 16, are configured so as to permit light to pass through them. In such a case beam splitter 12 is not needed.

As the laser is scanned in frequency, with the sample of interest present inside the cavity, the increased absorption caused by the sample (relative to an empty cavity) causes more rapid decay of the light intensity. Thus, the variation of the decay time constant with frequency produces a spectrum with peaks at those frequencies at which the laser is tuned into resonance with a molecular transition of the sample species. From this spectrum, the concentration of a known analyte can be determined.

As described, for example, by Romanini et al (Chem. Phys. Letters 264 (1997) 316 at 318, one of the two cavity mirrors (in this case mirror 14) is operably connected to a piezoelectric transducer 16 to match the laser wavelength and cavity length. The mirror separation is varied, so that the frequency of one longitudinal mode closely approximates the laser frequency.

Similar to the linear cavity two mirror instrument of Figure 1(a), the ring cavity three mirror instrument of Figure 1(b) has a CW tunable laser light source 10, a collimating lens 11 and three mirrors 17, 18 and 19 which define the laser light path. Normally, mirrors 18 and 19 are planar, and mirror 17 is concave. A piezoelectric transducer 16 translates mirror 17 along the 101 which bisects the triangle formed by the light path to thereby adjust the cavity path length to conform to the laser frequency. On figures 1a and 1b, mirror 14 and piezoelectric transducer 16 are shown as separate elements for convenience only. In practice, a mirror translation assembly is frequently employed where mirror and piezoelectric transducer are an integrated unit.

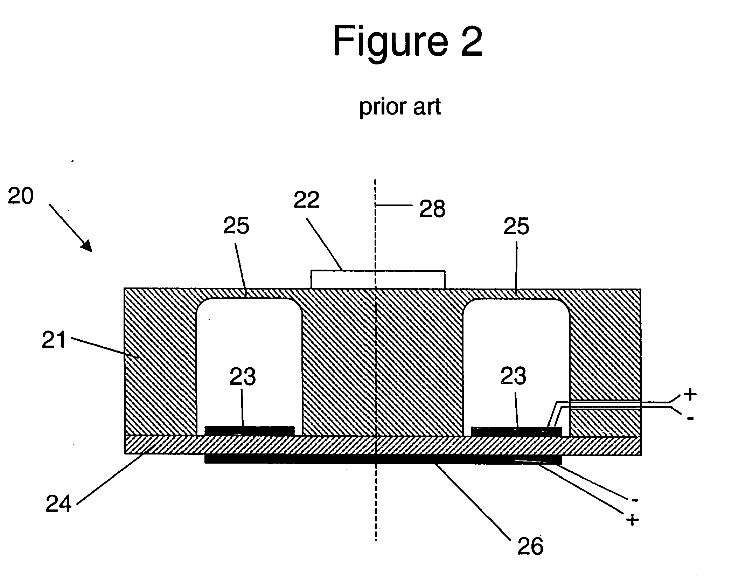

Operational requirements for a path length controller for a ring laser gyroscope mirror and a CRDS instrument mirror have some elements in common. Figure 2 shows a cross-sectional view of a mirror assembly 20 of a type designed for use in ring laser gyroscopes. Mirror 22 is mounted in the front face of support frame 21 which is supported on base plate 24. When voltages are applied to piezoelectric element 23 and to piezoelectric element 26, the piezoelectric strain induced in elements 23 and 26 by the applied voltages causes the base plate 24 and a thin section 25 of frame 21 to flex, thereby moving mirror 22 forward or backward along axis 28. See also US Patents Nos. 5,116,131 and 5,116,128.

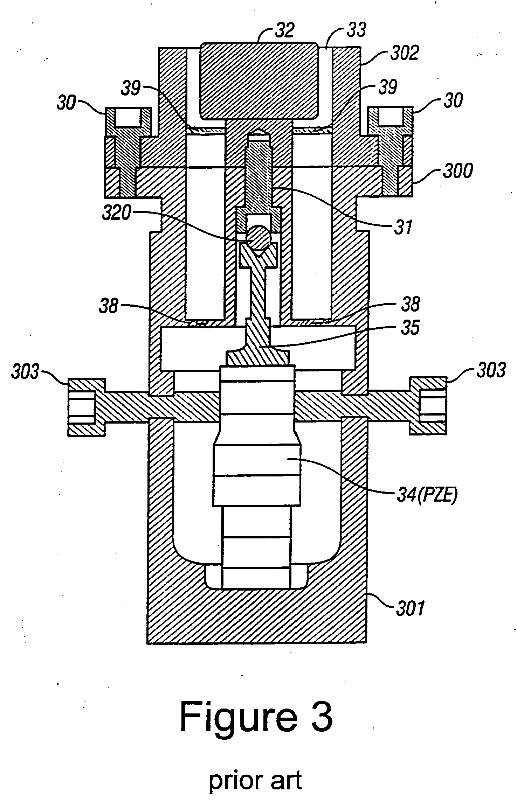

Figure 3 is a cross-sectional view of a prior art mirror translation assembly of a type used in CRDS instruments. This assembly includes a three piece, essentially cylindrical, metal housing 300, 301 and 302. Parts 300 and 301 screw together and part 302 is bolted to 300 using peripheral bolts 30 (two of six are shown) and also center bolt 31. Internal components include ball bearing 320 to reduce the tendency of mirror 33 to tip or cant when it moves due to the action of piezoelectric multi-layer crystal transducer 34 on driver 35. Initial alignment is achieved by adjusting peripheral screws 303 (two of six are shown). Mirror 33 is affixed to housing 302, typically has a concave front surface 32, and is normally fabricated from a glassy material such as fused silica. Housing components 300, 301, and 302, driver member 35 and the screws and ball bearings are fabricated from stainless steel.

Membranes 38 and 39, which flex when driver 35 is urged forward by transducer element 34, are thin sections of housing parts 300 and 302, respectively. Because the transducer must move a substantial weight and must flex a relatively stiff material (steel), the transducer of this design must be a complex and expensive multi-layer structure and/or must operate at relatively high voltage, both of which are disadvantageous. This assembly is complex, expensive and difficult to fabricate with the necessary precise alignment.

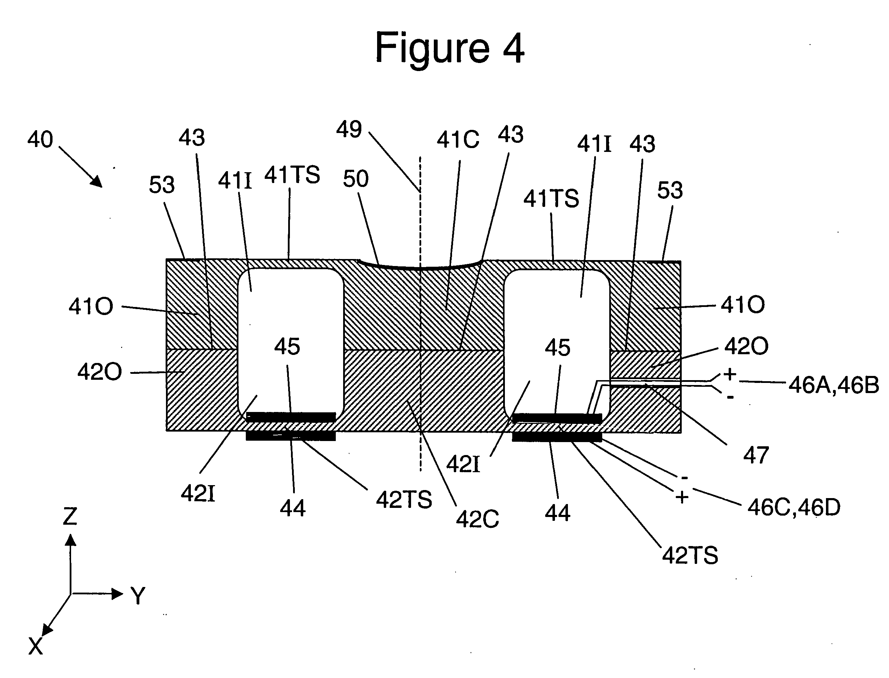

Figure 4 is a cross-sectional view of a mirror translation assembly 40 according to a preferred embodiment of the present invention. The main elements of mirror assembly 40 are mirror support member 41, transducer support member 42, transducers 44 and 45, and mirror 50.

Mirror support member 41 includes an outer annular mirror support section 41O of solid material (e.g., a glassy material), a central mirror support section 41C, also of solid material, that is spaced apart from outer section 410 and includes a portion of axis 49, and a thin section 41TS of solid material which connects outer section 410 to central section 41C. Outer section 410, thin section 41 TS and central section 41C of mirror support member 41 have the same material composition and form a one piece (monolithic) structure

Transducer support member 42 likewise includes an outer annular transducer support section 420 of solid material (e.g., a glassy material), a central transducer support section 42C of solid material that is spaced apart from outer section 420 and includes a portion of axis 49, and a thin section 42TS of solid material which connects outer section 420 to central section 42C. Outer section 420, thin section 42TS and central section 42C of transducer support member 42 have the same material composition and form a one piece structure. Preferably, mirror support member 41 and transducer support member 42 have the same material composition. The thickness (i.e., z directed extent on figure 4) of thin section 41TS is preferably between about 150 microns and about 1500 microns. The thickness of thin section 42TS is also preferably between about 150 microns and about 1500 microns.

The first and second thin sections, 41TS and 42TS, are spaced apart and face each other through the annular groove defined by a groove 41I in mirror support member 41 and a groove 42I in transducer support member 42, as shown in Figure 4. Although members 41and 42 are preferably approximately cylindrically symmetrical about axis 49, other non-symmetric or less symmetric configurations are possible.

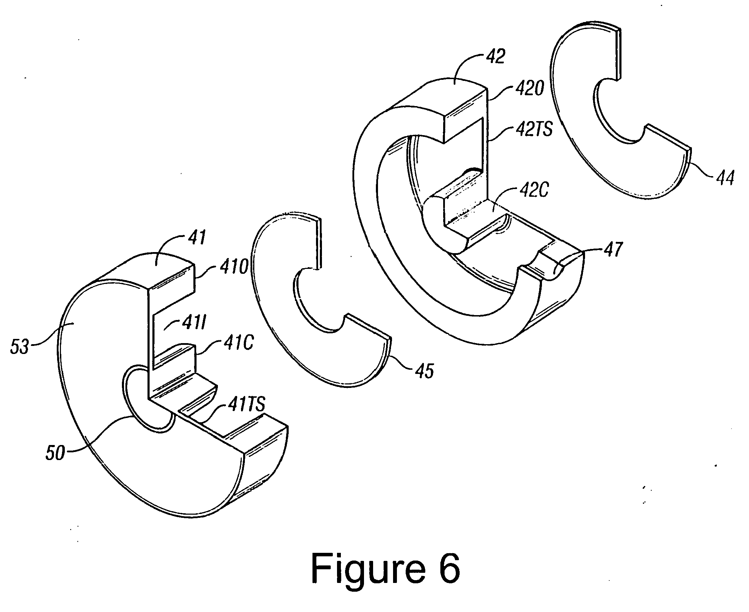

A thermal-cure epoxy is normally the adhesive of choice for bonding support members 41 and 42 together along the bond line 43, although if the two interfacing surfaces are polished with sub-Angstrom root mean square roughness, a suitably strong bond may be achieved through physical contact alone, a process known as optical contacting. Support members 41 and 42 are shown as being of substantially identical shape, which is preferred because this facilitates efficient manufacture. However, this is not a requirement of the invention. Transducer support member 42 has a wiring aperture 47, which is normally formed after initial fabrication. Transducers 44 and 45 are secured and bonded (e.g., by epoxy) to the upper and lower surfaces of thin section 42TS as shown in Figure 4 and Figure 6, and are preferably fabricated from piezoelectric (PZE) material and are annular (washer shaped). Although not required, it is also preferred that transducers 44 and 45 have substantially identical material compositions and dimensions.

In a piezoelectric material, Sⱼₖ = dᵢⱼₖ Eₖ, where Sⱼₖ is the strain tensor, Eₖ is the electric field vector and dᵢⱼₖ is a third rank material tensor which relates the strain to the electric field. For example, if an electric field is applied in the z direction, then the z directed compressive (or tensile) strain is given by S_{zz} = d_{zzz}E_{z} and the x and y directed compressive (or tensile) strains are given by Sₓₓ = d_{zxx} E_{z} and S_{yy} = d_{yzz} E_{z} respectively. Application of an electric field to a piezoelectric material can also cause shear strains (i.e. Sᵢⱼ with i not equal to j), but such shear strains may usually be neglected in transducer applications. Piezoelectric coefficients dᵢᵢᵢ which give rise to strain in the direction of the electric field are referred to as "on-diagonal" coefficients. Piezoelectric coefficients dᵢⱼⱼ, with i not equal to j, which give rise to strain in directions other than the electric field direction are referred to as "off-diagonal" coefficients. The strain S_{zz} gives the fractional length change (i.e., ΔL/L) in the z direction, and similarly the strains Sₓₓ and S_{yy} give the fractional length change in the x and y direction respectively.

In the preferred embodiment of figure 4, piezoelectric transducers 44 and 45 preferably include electrodes to enable the application of an electric field in the z direction on figure 4 (i.e., the electric field is parallel to axis 49). Since transducers 44 and 45 are preferably thinnest in this direction, the voltage required to obtain a desired electric field between the electrodes is reduced. In order to translate mirror 50, thin sections 41TS and 42TS are forced to deform by the action of transducers 44 and 45. To accomplish this deformation of thin sections 41TS and 42TS, it is most efficacious for transducers 44 and 45 to expand (or contract) in the x and y directions (as opposed to the z direction). In other words, the off-diagonal piezoelectric coefficients of the transducer material are more relevant than the on-diagonal piezoelectric coefficients. Therefore, materials with relatively large off-diagonal piezoelectric coefficients (i.e., greater than about 180 pm/V) are preferred. When two transducers are present, as shown in Figure 4, it is preferred to drive the transducers so that transducer 44 expands in the xy plane and transducer 45 contracts in the xy plane (or vice versa) by roughly the same amount, so that the two transducers cooperate substantially equally in deforming thin sections 41TS and 42TS to translate mirror 50.

Alternatively, a single transducer can be used (i.e. either transducer 44 or transducer 45, but not both), and in this case, the required voltage to obtain a given translation of mirror 50 will be roughly double compared to that required in the case of two transducers. In some cases it is desirable to provide coarse and fine control of the translation of mirror 50. One approach for providing coarse and fine control is to choose two different PZE materials, one material having off-diagonal piezoelectric coefficients substantially larger than the off-diagonal piezoelectric coefficients of the other material (i.e. greater by a factor of at least about eight). An alternative approach is to have transducers 44 and 45 made from the same PZE material, and drive them with different voltage sources having different voltage resolutions.

Since transducers 44 and 45 are affixed to thin section 42TS, the dependence of the deformation of thin sections 41TS and 42TS and the resulting translation of mirror 50 on the voltages applied to the transducers is complicated, since the geometry and elastic properties of support members 41 and 42 must be accounted for. The piezoelectric strain given by Sⱼₖ = dᵢⱼₖ Eₖ can be regarded as a "force" applied to assembly 40 which causes it to change its shape, and more specifically to translate mirror 50. In other words, transducers 44 and 45 have nominal dimensions (i.e. the dimensions they have when there is no applied electric field), and application of an electric field causes the transducer dimensions to depart from nominal by an amount which depends on the applied electric field (i.e., Sⱼₖ = dᵢⱼₖ Eₖ).

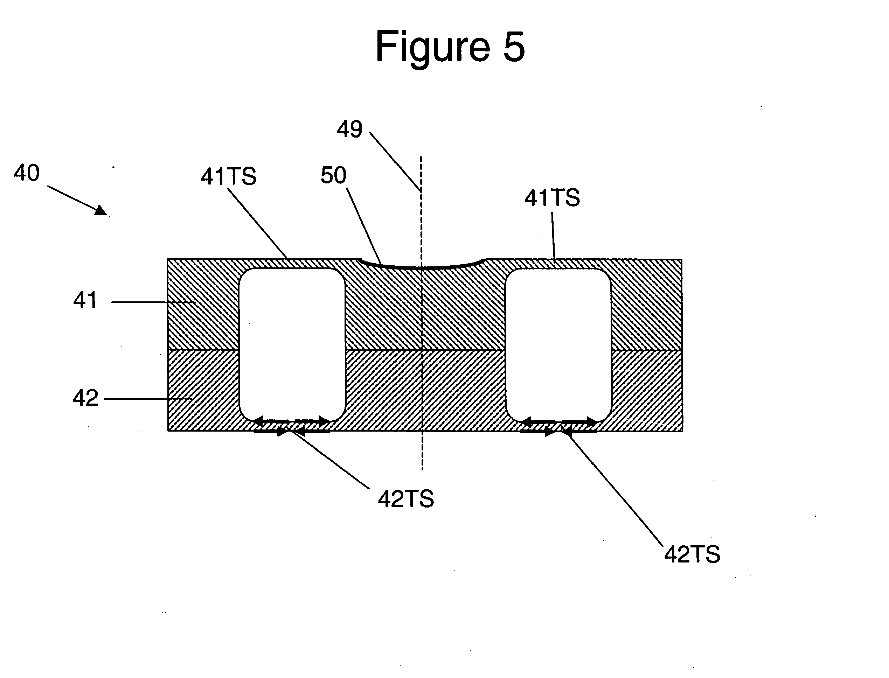

Voltages are applied through electrical wiring, 46A and 46B, to PZE transducer 45 through aperture 47, and through electrical wiring, 46C and 46D, to PZE transducer 44. The transducers impose stresses on thin section 42TS schematically as indicated in Figure 5. These stresses cause thin section 42TS to "bow" or become curved upward (or downward) depending on the polarity of the applied voltage. In the case schematically shown in Figure 5, the interior surface of thin section 42TS is under tension, and the exterior surface of thin section 42TS is under compression, which causes thin section 42TS to curve in a downward direction. This bowing action on the thin section 42TS will cause the central sections, 41C and 42C, of the support members, 41 and 42, to move upward or downward along the (z-coordinate) axis 49, in response to bowing upward or downward, respectively, of the thin section 42TS. The magnitude of this axial movement of the central sections, 41C and 42C, will normally increase monotonically with the applied voltage. Thin section 41TS also bends upward or downward to accommodate axial movement of central sections 41C and 42C.

Suitable materials for the preferred piezoelectric transducers, 44 and 45, include, but are not limited to, barium titanate, lead zirconate titanate, lead titanate and lead magnesium niobate. Although Figure 4 shows two transducers, 44 and 45, one on each side of the thin section 42TS, one can use only one transducer (44 or 45) located on either one or the other side of the thin section 42TS, as previously discussed, although this is not a preferred approach. Alternatively, instead of a piezoelectric material, the transducer (or transducers) can be fabricated from a magnetostrictive material such as described in US Patent No. 4,308,474

Mirror support member 41 is affixed to the CRDS instrument (not shown) around the outer periphery of the front face of this member, at locations indicated by reference number 53, so that outer sections 41O and 42O do not move relative to the cavity when the transducers are activated. Preferably, support members 41 and 42 are made from the same material to decrease the effects of differential thermal expansion. Support members 41 and 42 are preferably fabricated from glassy materials having low thermal expansion coefficients, for example, from materials such as Cervit, ZERODUR or ULE glass.

Mirror 50 is preferably a high reflectivity (≥ 99.5 percent) multi-layer (≥ 10 layers) dielectric coating (each layer having a thickness of about λ/4) that is deposited on the top face of central section 41C of mirror support member 41. In other words, mirror 50 is preferably a multi-layer quarter-wave stack. If desired, curvature of mirror 50 is preferably obtained by grinding the top face of center section 41C as indicated on figure 4. The radius of curvature of mirror 50 and of the underlying mirror support central section 41C will be changed negligibly, if at all, by the action of transducers 44 and 45, because the thickness of sections 41C and 42C relative to thin sections 41TS and 42TS ensures negligible deformation of sections 41C and 42C. Suitable mirror layer materials include, for example, silicon dioxide, titanium dioxide, tantalum oxide, niobium oxide and zirconium dioxide. The mirror layer materials and thicknesses are chosen to provide appropriate reflectivity in the operating wavelength range of the light source. The layers comprising mirror 50 are preferably of uniform thickness and conform closely to the configuration of the underlying mirror support member 41. Suitable design and deposition techniques for mirror 50 are known in the art. Alternatively, mirror 50 may be fabricated separately and affixed to the top face of the mirror support member 41, and in this case the top face of central section 41C is preferably flat.

Preferably, the central sections, 41C and 42C, are substantially transparent to light in the operating wavelength range. In this embodiment, a known fraction (e.g., 0.5 percent) of light incident on mirror 50 passes through the mirror and through the central sections, 41C and 42C, and is received by a photodetector that allows alignment of and/or monitors the intensity or other relevant characteristic(s) of the incident light at one or more selected wavelengths λ.

The mirror support system 40 of the present invention has numerous advantages over the prior art designs shown in Figures 2 and 3. The present invention is easier to fabricate than prior art designs because the transducer support member 42 and the mirror support member 41 can be of substantially identical configuration as shown. When compared to the design of Figure 2, the annular groove in each of the support members, 41 and 42, is significantly shallower and can thus be more accurately formed. The base plate of the prior art design shown in Figure 2 is both thin and flat and thus has a tendency to warp in service. In the design of the present invention, transducer 45 is self-centering and avoids a tendency toward lateral displacement. Additionally, the stresses caused by the operation of the transducers are far from the bond line 43, thereby significantly reducing the tendency of the bond to creep, which can lead to tilt when mirror 50 is translated. In the prior art mirror assembly of Figure 2, the interface between the thin base plate (24 on figure 2) and the support frame (21 on figure 2) is at or near the point of maximum stress. Advantages of the present invention, when compared to the complex structure of Figure 3, have already been discussed.

Figure 6 is an exploded, partially cut away isometric view of the CRDS mirror translation assembly of the present invention where the reference numerals in Figure 6 correspond to the same reference numerals in Figure 4. As previously indicated, the mirror support member 41 and the transducer support member 42 have annular outer sections 410 and 420 respectively, and have central sections, 41C and 42C, respectively. Preferably, except for the aperture 47, which provides a via for the wires, 46A and 46B, from a voltage source (not shown) that excites transducer 45, the support members, 41 and 42, are of substantially identical configuration. The top of central section 41C of the mirror support member 41 is preferably ground concave so that mirror 50, when deposited thereon, will also have a concave configuration. The shaded area 53 indicates where the mirror support member 41 is affixed to the optical cavity. The annular (washer-shaped) transducer elements, 44 and 45, are also preferably of substantially identical geometry and preferably have the same material composition.

## Claims

1. In a cavity ring down spectroscopy instrument comprising an optical resonator including at least one mirror translation assembly, the improvement wherein the mirror translation assembly comprises:
a) a monolithic mirror support member comprising:
a first central section of solid material having a first axis; and
a first annular outer section of solid material that is spaced apart from the first central section, but is connected thereto by a first thin section having a substantially smaller thickness than the first central and outer sections;
b) a monolithic transducer support member comprising:
a second central section of solid material, affixed to the first central section, and having a second axis substantially parallel to the first axis; and
a second annular outer section of solid material that is spaced apart from the second central section, but is connected thereto by a second thin section having a substantially smaller thickness than the second central and outer sections, wherein the first and second thin sections are spaced apart from each other, and the second outer section is affixed to the first outer section;
c) at least one transducer, having nominal dimensions, affixed to a surface of the second thin section, wherein the dimensions of the transducer are changed from the nominal dimensions as a result of input from a control signal; and
d) a mirror, positioned on a surface of the first central section;
wherein the first central section is spaced apart from the second outer section and the second central section is spaced apart from the first outer section,
whereby the mirror is translated in a direction substantially parallel to the first axis in response to the control signal.

2. A mirror translation assembly, for use in cavity ring down spectroscopy, comprising:
a) a monolithic mirror support member comprising:
a first central section of solid material having a first axis; and
a first annular outer section of solid material that is spaced apart from the first central section, but is connected thereto by a first thin section having a substantially smaller thickness than the first central and outer sections;
b) a monolithic transducer support member comprising:
a second central section of solid material, affixed to the first central section, and having a second axis substantially parallel to the first axis; and
a second annular outer section of solid material that is spaced apart from the second central section, but is connected thereto by a second thin section having a substantially smaller thickness than the second central and outer sections, wherein the first and second thin sections are spaced apart from each other, the second outer section is affixed to the first outer section;
c) a mirror, positioned on a surface of the first central section;
d) at least a first transducer, having first nominal dimensions, affixed to a first surface of the second thin section, wherein the dimensions of the first transducer are changed from the first nominal dimensions by a first amount as a result of input from a first control signal;
wherein the first central section is spaced apart from the second outer section and the second central section is spaced apart from the first outer section,
whereby the mirror is translated in a direction substantially parallel to the first axis in response to the first control signal.

3. The assembly of claim 2, wherein said first axis is substantially collinear with said second axis.

4. The assembly of claim 3, wherein said assembly is substantially cylindrically symmetric about said first axis and said second axis.

5. The assembly of claim 2, wherein said first transducer comprises a piezoelectric element.

6. The assembly of claim 5, wherein said piezoelectric element comprises a material selected from the group consisting of barium titanate, lead zirconium titanate, lead titanate and lead magnesium niobate.

7. The assembly of claim 5, wherein said first control signal comprises an electric field having an electric field direction substantially parallel to said second axis.

8. The assembly of claim 7, wherein said piezoelectric element comprises a material having an off-diagonal piezoelectric coefficient, and wherein a magnitude of said off-diagonal piezoelectric coefficient is greater than about 180 pm/V.

9. The assembly of claim 2 wherein said first transducer comprises a magnetostrictive element.

10. The assembly of claim 2, wherein at least one of said mirror support member and said transducer support member comprises a glassy material.

11. The assembly of claim 10, wherein both said mirror support member and said transducer support member are comprised of the same glassy material and wherein said glassy material is selected from the group consisting of Cervit, ZERODUR and ULE glass.

12. The assembly of claim 2, wherein said mirror comprises a multilayer quarter-wave stack including layer materials selected from the group consisting of silicon dioxide, titanium dioxide, tantalum oxide, niobium oxide and zirconium dioxide.

13. The assembly of claim 2, wherein a portion of optical radiation incident on said mirror is transmitted through said mirror, and a fraction of the transmitted portion is emitted from said assembly after passing through said first and second central members.

14. The assembly of claim 13, further comprising an optical detector to receive a portion of said emitted light.

15. The assembly of claim 2, wherein said first and second central sections are affixed to each other with an adhesive and wherein said first and second outer sections are affixed to each other with an adhesive.

16. The assembly of claim 2, wherein said first and second central sections are affixed to each other by optical contacting and wherein said first and second outer sections are affixed to each other by optical contacting.

17. The assembly of claim 2 wherein said mirror support member and said transducer support member have substantially the same shape.

18. The assembly of claim 2, further comprising a second transducer, having second nominal dimensions, affixed to a second surface of said second thin section, wherein said second thin section is positioned between said first transducer and said second transducer, and wherein dimensions of the second transducer are changed from said second nominal dimensions by a second amount as a result of input from a second control signal.

19. The assembly of claim 18, wherein said first axis is substantially collinear with said second axis.

20. The assembly of claim 19, wherein said assembly is substantially cylindrically symmetric about said first and said second axis.

21. The assembly of claim 20, wherein said first and second transducers are substantially annular and wherein said first nominal dimensions and said second nominal dimensions are substantially the same.

22. The assembly of claim 21, wherein said first and second control signals cause said first amounts and said second amounts to have substantially identical magnitudes and opposite signs.

23. The assembly of claim 18, wherein said first transducer and said second transducer comprise a first piezoelectric element and a second piezoelectric element, respectively.

24. The assembly of claim 23, wherein said first piezoelectric element and said second piezoelectric element have substantially identical material compositions.

25. The assembly of claim 23, wherein said first piezoelectric element and said second piezoelectric element have first and second piezoelectric material compositions, respectively, that are different from each other.

26. The assembly of claim 25, wherein said first and second piezoelectric materials have first and second off-diagonal piezoelectric coefficients, respectively, and a magnitude of a ratio of the first piezoelectric off-diagonal coefficient to the second piezoelectric off-diagonal coefficient is greater than about eight.
